# EUROPEAN PATENT APPLICATION

(11) **EP 2 316 552 A1**
(43) Date of publication of application: **04.05.2011**
(21) Application number: 10014066.4
(22) Date of filing: 28.06.2006
(51) Int. Cl.: B01D 15/22, G01N 30/60

(54) **Disposable chromatographic columns**

(30) Priority: 30.06.2005 US 171698
(62) Divisional of application: 06774265.0
(71) Applicant: Teledyne ISCO, Inc., Lincoln, Nebraska 68504 (US)
(72) Inventor: Hodgin, Delwin, lincoln, NE 68507 (US); Davison, Dale, Greenwood, NE 68366 (US); Urh, John, Matthews, North Carolina 28104 (US)
(74) Representative: UEXKÜLL & STOLBERG

(57) **Abstract**

To make an inexpensive chromatographic column and perform chromatography with it, column walls and a column end with a port are molded integrally from plastic. A closure is integrally molded with a port as well. One type of closure includes part of a snap-on fastener integrally molded to it to cooperate with corresponding parts molded integrally with the column walls. In another type of closure for higher pressures, the closure is spin welded to the tubular walls. In still another type of closure for still higher pressures, a retaining plate is pressed into the column to hold the packing in place. The closures have channels molded into them radiating from a port and opening toward packing material such as silica beads or porous polymeric plugs. Filters and secondary seals may be located at the ends to prevent leakage of the packing material.

## Description

### BACKGROUND OF THE INVENTION

This invention relates to chromatography and more specifically to chromatographic columns, methods of making chromatographic columns and methods of using chromatographic columns.

The use of chromatographic columns for the analysis and separation of substances from mixtures has long been known. One type of such column is a disposable column intended for limited use and accordingly manufactured with economy in mind. Generally, this type of column is manufactured of inexpensive plastics and designed to be easily assembled by filling the body of the column with the desired packing with frit plugs on each end of the packing to hold the packing in place and then welding the open end or ends closed. In some columns, the packing is held under pressure to reduce its tendency to shift and separate since the shifting and separation tends to create nonuniformity and loose particles of packing. The lack of uniformity in the packing promotes peak spreading of the eluant.

In one prior art design of this type of disposable column, the packing is radially compressed by gas pressure applied between first and second walls. A device of this type is disclosed in United States patent 4,250,035 issued February 10, 1981, to McDonald, et al. Other radial clamping means are disclosed in this patent and United States patent 6,444,122 granted September 3, 2002, to Van Davelaar.

In another prior art design, the packing is axially compressed between frit plugs that have been cooled to a very low temperature so that their diameter is small enough to permit the frit plugs to fit within the column. When the frit plugs warm, they grip the walls of the column sufficiently to hold them in place. In some prior art columns, the column bodies are composites with a deformable inner layer and the frit plugs are held in place by crimping the inner layer against the frit plug. This type of column is disclosed in United States patent publication 2005/0006292 and United States patent 6,783,673.

The prior art chromatographic columns of this type have several disadvantages, such as: (1) they are more costly than desirable to assemble; (2) some higher pressure embodiments are more subject to peak spreading from the formation of discontinuities in the uniformity of the packing caused by shifting of packing material; (3) they require a permanent housing to hold the disposable column during chromatographic runs; and (4) they are not as easily subject to assembling with automatic equipment.

It is an object of the invention to provide an improved column and method of manufacturing it wherein automatic techniques are applicable to reduce cost.

In accordance with this object, a chromatographic column comprises a tubular body portion adapted to receive packing material; a first end integrally formed with the tubular body portion and having an integrally formed first port; and a second end separately formed from the tubular body portion and having an integrally molded second port. The column is characterized by at least one column adjusted retaining plate within the tubular body portion between the first end and the second end. Preferably, the column includes design-pressure packing. Advantageously in one embodiment, the second end is spin welded to the tubular body. The retaining plate has a modulus of elasticity between 27 times 10⁶ and 32 times 10⁶ psi and a thickness of no more than 1/8 of an inch in the preferred embodiment. The chromatographic column includes a first frit, and a second frit, with the packing material between the first frit and the second frit. The column adjusted retaining plate is located between the second frit and the second end; and the retaining plate is a chromatographically-adjusted retaining plate. At least one of said first and second ends has a plurality of channels radially extending from a corresponding one of the first and second ports with an opening onto the tubular body portion. The column adjusted retaining plate is formed of chemically inert material with an outer edge capable of gripping the inner wall of the tubular body.

In this embodiment, one of the tubular body portions and the second end includes a plurality of biased spring members and the other of said tubular body portions and second end including a corresponding plurality of detents. The detents and the spring members are shaped to latch upon movement of the second end onto said tubular body portion with an interference fit. One embodiment of column adjusted retaining plate for a chromatographic column comprises a thin member with sufficient open spaces to provide sufficient flexibility and sufficient thinness so that it bends when pressed into place in the chromatographic column. When in place, it grips the walls of the column. The open spaces are sized to avoid dead space so great as to significantly degrade chromatographic peaks. The retaining plate is sized and shaped to grip the inner walls of the chromatographic column's tubular body tightly enough as it is linearly pressed into the column to retain the packing under pressure and to hold the pressure: It has an effective modulus of elasticity sufficiently low to flex as it is pressed into the column by an amount greater than the increase in inner diameter of the column as the column moves outwardly under high pressure and sufficiently high to grip the walls of the column with enough force to not be moved after it has expanded by pressure from the packing material. It has a thickness between 10 thousandths of an inch and 0.125 of an inch.

In manufacturing the chromatographic column, a column body is molded from plastics. To mold the column body, a side wall portion is molded, a first end portion is integrally molded with the side wall portion and an open second end forming an interior of the column body is molded. The first end portion is integrally molded with a first port. A closure is molded for the open second end with an integrally molded second port as part of the closure. Packing material is added to the column and the closure is fastened in place with a molded port to the column body together at the second end by a method selected in accordance with the pressure to be sustained during a chromatographic run. In a high pressure rated column, the fastening method that is selected includes the additional step of inserting at least one column adjusted retaining plate and pressing it into place to pressurize the packing material during assembly of the column and before the closure is fastened to the column body. The step of fastening the closure includes the step of fastening the closure by spin welding. The step of fastening the closure by spin welding includes the step of grasping the closure and spinning the closure until the closure is in intimate relationship with the column adjusted retaining plate and a temperature between the closure and the column body has become high enough by friction to weld the closure to the column body. At least one chromatographically-adjusted retaining plate is inserted before the closure is fastened to the column body for high pressure columns.

The step of inserting at least one column adjusted retai ning plate includes the step of forming a chromatographically-adjusted retaining plate with a modulus of elasticity of between 27 times 10⁶ and 32 times 10⁶ psi and a thickness of no more than 1/8 inch. The step of inserting at least one column adjusted retaining plate further includes the steps of inserting a chromatographically-adjusted retaining plate after the packing material has been added and pressing the retaining plate inwardly to exert force on the packing material.

The step of adding packing material includes the step of vibrating the column to evenly distribute the packing material. The step of inserting at least one chromatographically-adjusted retaining plate during assembly of the column and before the closure is fastened to the column body includes the step of applying pressure to the at least one chromatographically-adjusted retaining plate during the assembly of the column sufficient to form a design-pressure packing.

To perform chromatography, solvent is caused to flow from at least one source of solvent through an inlet port of a column. The column includes a tubular body portion with body walls, an inlet end member having an inlet port, packing material, and an outlet end member having an outlet port, wherein at least one of the inlet end member and outlet end member is integrally molded with the tubular body portion. The solvent is caused to flow from the inlet port through radial channels integrally formed with the inlet port and opening toward an interior of the column; causing the solvent to flow from the radial channels through frit. The solvent is caused to flow through packing material; causing the solvent to flow through the packing material into the channels integrally formed in the outlet end member into the outlet port. This is done by causing the solvent to flow in a path between the inlet port and the outlet port through at least one column adjusted retaining plate. The column is disposed of after between one and ten chromatographic runs and a new column is inserted.

Advantageously, solvent is caused to flow from at least one source of solvent through an inlet port of a column. The solvent is caused to flow from said inlet port through radial channels integrally formed with the inlet port and opening toward an interior of the column. The solvent is caused to flow from said radial channels through frit. The solvent is caused to flow through packing material, said column including a tubular body portion with body walls, an inlet end member having an inlet port, packing material, and an outlet end member having an outlet port. At least one of said inlet end member and outlet end member is integrally molded with the tubular body portion, causing the solvent to flow through the packing material into the channels integrally formed in the outlet end member into the outlet port. In this process, it is determined if pressure is low, medium range or high. For low pressures, the solvent is caused to flow in its path between the inlet port and the outlet port through a snap-on end plate. For a medium range of pressures, the solvent is caused to flow in its path between the inlet port and the outlet port through an end plate that is spin welded in place. For high pressures, the solvent is caused to flow in its path between the inlet port and the outlet port through at least one column adjusted retaining plate.

From the above description, it can be understood that the method and apparatus of this invention has several advantages, such as: (1) it is economical in terms of its fabricating materials; (2) it is inexpensive to assemble; (3) it can be assembled readily in an automated process; and (4) it can be used for relatively high pressures without developing excessive packing material discontinuities.

### SUMMARY OF THE DRAWINGS

The above noted and further features of the invention will be better understood from the following detailed description when considered with reference to the accompanying drawings in which:
FIG. 1 is a perspective view of a column in accordance with an embodiment of the invention;
FIG. 2 is an exploded perspective view of the column of FIG. 1 viewed from another angle;
FIG. 3 is a-longitudinal sectional view of the column of FIG. 1;
FIG. 4 is a side elevational view partly broken away to show sections of the column of FIG. 1;
FIG. 5 is a perspective view of a cantilever assembly forming a portion of a snap-fit assembly for the column of FIG. 1;
FIG. 6 is a cross-sectional view of the cantilever assembly of FIG. 5;
FIG. 7 is an enlarged, fragmentary, sectional view of an end portion of the column showing an interference fit between the end portion and the tubular wall of the column;
FIG. 8 is a block diagram of a chromatographic system in accordance with the embodiment of the invention;
FIG. 9 is a block diagram of a process of assembling a column in accordance with an embodiment of the invention;
FIG. 10 is a block diagram of a process of using a column in accordance with an embodiment of the invention;
FIG. 11 is an elevational side view partly broken away and sectioned of another embodiment of column in accordance with the invention;
FIG. 12 is an exploded perspective view of the column of FIG. 11 viewed from another angle;
FIG. 13 is an exploded perspective view of another embodiment of a column in accordance with the invention;
FIG. 14 is a side elevational view, partly broken away and sectioned, of the embodiment of FIG. 13;
FIG. 15 is a plan view of an embodiment of a retaining plate in accordance with an embodiment of the invention;
FIG. 16 is a side view of the embodiment of the retaining plate of FIG. 15;
FIG. 17 is a plan view of another embodiment of the retaining plate in accordance with an embodiment of the invention;
FIG. 18 is a side view of the embodiment of FIG. 17;
FIG. 19 is a plan view of another embodiment of a retaining plate in accordance with an embodiment of the invention;
FIG. 20 is a side view of the embodiment of FIG. 19; and
FIG. 21 is a flow diagram of the process of using a column in accordance with the embodiment of FIGS. 13-20.

### DETAILED DESCRIPTION

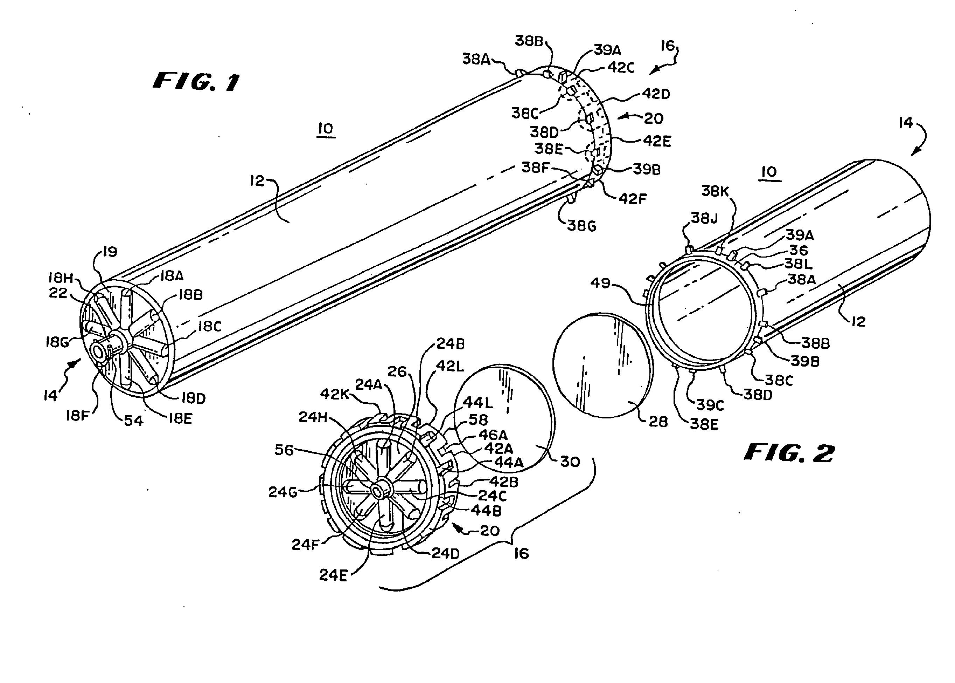

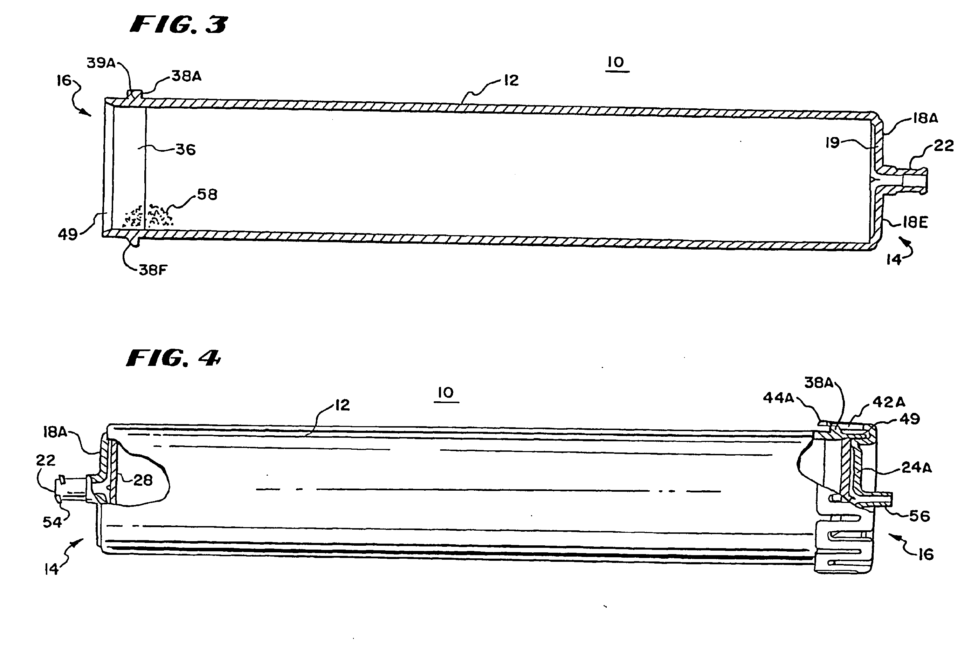

In FIG. 1, there is shown a column 10 having a column body 12, an inlet end 14 and an outlet end 16 with the direction of flow of fluid being from the inlet end 14 through packing material 58 (FIG. 3) in the tubular column body 12 and out of the outlet end 16 in that order. The inlet end 14 includes a plurality of radially extending inlet channels 18A-18H, a base plate or end portion 19 and an inlet port 22. The column body 12 has a side wall portion integrally molded with a first end (inlet end 14) and has a second molded open end (outlet end 16) with outlet and inlet ports molded in the end members. At least one of the first and second ends have channels molded in them. The inlet port 22 includes a female luer connection partly threaded at 54 to connect to a source of fluid through a connector which in some embodiments may be spring-biased (not shown in FIG. 1) and extends as a hollow cylindrical tube through the center of the base plate 19 where it communicates with the inlet channels 18A-18H. The inlet port 22 does' not require the use of wrenches or other tools to connect it to the source of fluid. While in the above description, the inlet end 14 (first end) is integrally molded with the column side wall and the outlet end 16 (second end), either end can be integrally molded end and the other end the separately molded end.

The inlet channels 18A-18H are formed in the base plate or end portion 19 and open towards the packing material 58 (not shown in FIG. 1) that fills the column body 12. The inlet channels 18A-18H extend radially from the inlet port 22 to the circumference of the base plate or end portion 19 and are equally, angularly spaced from each other for the dispersion of fluid across the cross-section of packing material 58 (FIG. 3) within the column body 12 for more even flow through the packing material 58 within the column body 12 toward the outlet end 16. However, the inlet channels 18A-18H are not necessary for the proper operation of the column 10 nor to obtain the benefits of low cost and leak free operation.

The outlet end 16 includes a plurality of circumferentially-spaced detents 38A-38L (detents 38A-38G being shown in FIG. 1) and a plurality of circumferentially-spaced guide posts 39A-39F (39A and 39B being shown in FIG. 1) formed on the outlet end 16 of the column body 12 and cooperating with a plurality of cantilever members 42A-42L (42C-42F being shown in FIG. 1) to hold a cantilever assembly 20 in place on the outlet end 16. The outlet end 16 is closed by the snap-on cantilever assembly 20 and held firmly in place by detents 38A-38L (38A-38G being shown in FIG. 1) with a sealing relationship with the aid of the column body 12.

To bend the cantilever members 42A-42L and hold them in place, the radially extending detents 38A-38L extend outwardly from the outer wall of the column body 12 with which they are integrally formed and are circumferentially spaced from each other at equal intervals. They are positioned to be received by openings in the cantilever members 42A-42L when the cantilever members have been moved inwardly on the wall of the column body 12 a sufficient distance on a tapered rim of the walls (not shown in FIG. 1) so a matching portion of the ends of the cantilever members 42A-42L of the snap on cantilever assembly 20 have an interference fit with the tapered rim of the walls of the column body 12. They are positioned inwardly from the edge of the column body 12 a distance that cooperates with the snap-on cantilever assembly 20 to maintain an interference fit that seals against the escape of fluid except through an outlet port 56 (not shown in FIG. 1).

One or more guide posts 39A-39F (39A and 39B being shown in FIG. 1) are also molded on the column body 12 aligned in the same circumferential ring with the detents 38A-38L to aid in aligning the detents with the cooperating cantilever members 42A-42L of the snap-on cantilever assembly 20. The guide posts 39A-39F only fit between the cantilever members 42A-42L, and being located between detents 38A-38L, insure that the detent s and cantilever members are in contact. They are at least equal in height to the detents 38A-38L. In the preferred embodiment, the detents 38A-38L and guide posts 39A-39F are approximately 15 of an inch high and the cantilever members 42A-42L are 70 thousandths of an inch thick. The thickness of the cantilever members 42A-42L and the height of the detents 38A-38L are selected to permit an adequate grip.

In this embodiment, the outlet end 16 is a snap-in place end and the inlet end 14 is molded integrally with the tubular column body 12. The column body 12, while cylindrical in the embodiment of FIG. 1, may have any cross-sectional shape suitable for chromatography and either the inlet end 14 or the outlet end 16 may be snapped on, or both may be snapped on although it is economical to have one side molded and the other side open for convenient filling in one side and closing with a snap-on cover or other easily sealable cover.

In FIG. 2, there is shown an exploded perspective view of the column 10 having the outlet port 56, the snap-on cantilever assembly 20, outlet channels 24A-24H in a cylindrical end plate or closure 26, and first and second filters 28 and 30. The filter 30 is mounted at the inlet end 14 and the filter 28 at the outlet end 16. They may be any conventional material but in the preferred embodiment are formed as a disk from powdered plastic to be porous to the fluids in the mobile phase of the chromatographic process being used but able to block passage of packing material 58 (FIG. 3) from passing through them into the ports. The outlet channels 24A-24H are formed in the end plate or closure 26 and have a semicircular cross-section opening onto the packing material 58 (FIG. 3) within the column body 12 to aid in distributing the eluant from the cross-section of the packing material 58 (FIG. 3) in the column body 12 to the outlet port 56.

The column body 12 is tapered slightly for ease in ejection of a mold during formation but has a portion 36 with a flat surface with the detents 38A-38L positioned to engage corresponding ones of a plurality of cantilever members 42A-42L at the outlet end 16 of the column 10. The radially-extending circumferentially-spaced detents 38A-38L are ramp shaped and mounted at the outer surface of the straight portion 36 of the column body 12 with the end nearest to the snap-on cantilever assembly 20 being lowest and sloping upwardly until they reach the top to aid in receiving the snap-fit cantilever assembly 20 and then falling sharply to provide a catching and holding surface to hold the cantilever assembly 20 at a location permitting an interference fit as will be described in greater detail below. The slope of the detents 38A-38L is selected to permit bending of the cantilever members 42A-42L without buckling.

In the preferred embodiment, the slope of the detents is 20 degrees but may be between 5 and 45 degrees depending on the distance of travel desired before the cantilever members 42A-42L snap in place. The guide posts 39A-39E have a steeply rising surface aligned with the low end of the ramp-shaped detents 38A-38L in the same circular cross section and are at least as high as the high end of the detents 38A-38L so they prevent movement of the cantilever assembly 20 onto the column body 12 unless the guide posts 39A-39F are positioned between cantilever members 42A-42L. With the guide posts 39A-39F positioned between cantilever members 42A-42L and inter-dispersed with the detents 38A-38L, the guide posts serve as guides to position the cantilever members 42A-42L with respect to the detents 38A-38L so the detents lift the cantilevers radially outwardly as the cantilever assembly 20 is moved onto the column body 12 until the cantilever members 42A-42L engage the end of the detents 38A-38L to hold the cantilever assembly 20 in place with an interference fit sealing the column body 12 of the column 10 to the cantilever assembly 20.

The outlet port 56 is formed integrally with the cantilever assembly 20. To provide an end seal, the end plate 26 of the cantilever assembly 20 includes a flat cylindrical torus extending inwardly perpendicular to the longitudinal axis of the column body 12 to an integrally formed outlet port 56 and radially outwardly to an outward ring that has a radially- outermost right-cylindrical wall with a curved base that connects to the integrally formed cantilever members 42A-42L extending in the opposite direction. The outlet port 56 rises in a direction substantially parallel to the walls of the column body 12 as a right regular cylinder. The rising walls of the outer ring have a sloped portion (not shown in FIG. 2) that cooperates with a tapered rim 49 of the walls of the column body 12 to form an interference fit.

To collect fluid from the cross-section of the packing material 58 (FIG. 3) while preserving the integrity of the bands of migrating species, the snap-on cantilever assembly 20 includes a plurality of the outlet channels 24A-24H which receive fluid from locations in the column body 12 of the column 10 and channel it to the outlet port 56. These channels 24A-24H are integrally formed with the end plate 26 and open inwardly toward the packing material 58 (FIG. 3) in the interior of the column body 12.

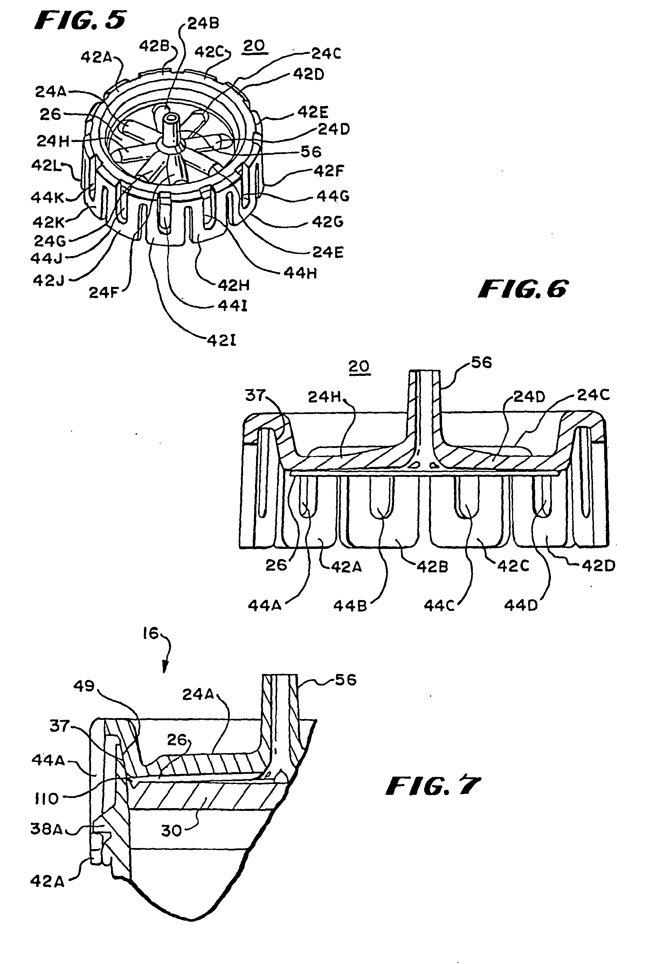

Circumferentially surrounding the end plate or closure 26 and integrally formed with it, is a sealing surface 37 (not shown in FIG. 2, see FIG. 6) extending substantially in the direction of the walls of the column body 12 and positioned to cooperate with the edge of the walls of the column body 12 to form a seal thereagainst. The cantilever members 42A-42L depend from the sealing surface 37 in the opposite direction to extend toward the detents 38A-38L, with each of the cantilever members 42A-42L having a central opening 44A-44L (44A, 44B and 44L being shown in FIG. 2) and being separated from the others by corresponding cantilever longitudinal spaces 46A-46L (46A only being shown in FIG. 2) forming U-shaped cantilever members 42A-42L each of which may be bent outwardly from the walls of the column body 12 by a corresponding one of the ramp-shaped detents 38A-38L in a manner to be described hereunder and receive the corresponding detent in the corresponding one of the openings 44A-44L.

With this arrangement, the filters 28 and 30 contain between them the packing material 58 (FIG. 3) and are between the molded inlet end 14 and snap-on outlet end 16 for the column body 12 of the column 10. The cantilever assembly 20 is forced linearly and axially onto the column body 12 with the cantilever members 42A-42L being bent outwardly by the ramp shaped detents 38A-38L and snapping over the detents 38A-38L to tightly pull the edge of the walls of the column body 12 so that the rim 49 near the edge is in an engaging position with a wall portion or sealing surface 37(FIG. 7) of the cantilever assembly 20 and thus to form a fluid tight seal between the tubular walls of the column body 12 and the cantilever assembly 20.

In the preferred embodiment, twelve cantilever members 42A-42L are used. However, the number of cantilever members is chosen to be sufficient to avoid stress that will result in premature failure before the end of the useful life of the column. Stress on the cantilever members at the point of holding and at the base is inversely proportionate to the number of cantilever members since the pressure will be evenly distributed around the periphery during a chromatographic run. The shear strain on the cantilever members 42A-42L at the ends of the detents 38A-38L and the tensile strain on the side portions of the cantilever members multiplied by the length of the side portions must be low enough not to reduce the pressure at the interference fit between the tapered rim of the walls of the body 12 and the sloped portion of the end plate 26 to permit leakage when the column is under pressure.

The moment of inertia and flexural modules of the cantilever members must be low enough so that the cantilever assembly can be moved up the detent without excessive force and high enough to snap over the detent's peak and remain in place. The number of cantilever members (42A-42L in the preferred embodiment) and the size of the openings (44A-44L in the preferred embodiment) are selected to keep the stress below a value that causes premature failure or excessive elongation. In the preferred embodiment, the material of the column body and the snap-fittings is polypropylene although many other materials can be used such as for example polyethylene or even metals since the choice of the material is based on cost. While in the preferred embodiment, the column is made of one material, different materials may be utilized, particularly to increase the rated pressure of a disposable column by incorporating parts of stronger plastic or metal reinforcing such as a reinforcing sleeve about the column body 12.

In FIG. 3, there is shown a longitudinal sectional view of a column 10 having a column body 12 with guide posts 39A-39F (39A being shown in FIG. 3) and detents 38A-38L (38A and 38F being shown in FIG. 3). As shown in this view, the inlet port 22 is integrally formed with its end piece and the body wall 12. The filter 30 (FIG. 2) is positioned at this end and held in place by the packing material 58, shown in fragmentary form in FIG. 3 but actually filling the column body 12 between the filters 28 and 30 (FIG. 2). The filter disc 30 prevents the packing material 58 from passing through the inlet port 22.

The column body 12 is molded of polypropylene manufactured by AMOCO and available from Polymerland Inc., Suite 150, 12200 Hebert Wayne Ct., Huntersville, NC 28078, as PP8439. However many other inexpensive materials may be used. In the preferred embodiment, one plastic is used for the entire column and the columns are intended for use at operating pressures of between gravity and 200 psi but a composite body such as with a strong sheath on the outside of the plastic body may extend operating pressures to 500 psi in a composite embodiment.

A tapered rim 49 is shown on the inner wall at the edge of the column body 12. This rim matches a surface on the cantilever assembly 20 (FIGS. 1 and 2) and is tapered downwardly to the edge of the walls of the column body 12 so that as the cantilever assembly 20 is pressed onto the column body 12, the fit becomes increasingly tight until an interference fit is formed between the walls of the column body 12 and the cantilever assembly 20. The distance that the cantilever assembly 20 must move onto the walls of the column body 12 is determined experimentally for each design of column and governs the amount and the length of the taper in conjunction with the location of the detents 38A-38L and the openings 44A-44L in the cantilever members 42A-42L to make a leak proof interference fit. In the preferred embodiment, the taper is 80 degrees from the plane perpendicular to the longitudinal axis of the body and there is an 80 degree slope on the mating wall of the cantilever assembly 20. The total angle of the slope affecting the tightness of fit should be a value of between 5 degrees and 35 degrees in accordance with the operating pressure.

Two of the inlet channels 18A and 18E of the channels 18A-18H are shown in this sectional view. As shown in this view, the outlet end 16 is open and available for inserting the packing material 58 prior to being closed by the snap-on cantilever assembly 20 (FIGS. 1 and 2) to hold the packing material 58 and the filters 28 and 30 (FIG. 2) in place. The filter 28 (FIG. 2) prevents the packing material 58 from being carried into the outlet port 56 (FIG. 2) and affecting the system.

In FIG. 4, there is shown a side, elevational view of the column 10 with portions broken away to illustrate the inlet and outlet ends 14 and 16 respectively. As shown in this figure, the filter 28 is mounted against the end of the column body 12 to block packing material 58 (FIG. 3) from passing into the inlet port 22. A thread 54 is provided for connection to the female lure so as to communicate with a pump and sample injector for chromatography. The columns may be connected in some embodiments to the chromatograph with spring biased connections not requiring high torque turning such as by wrenches to connect the column.

At the outlet end 16, the walls of the column body 12 are tapered. There is shown the tapered rim 49 of the walls of the column body 12 pressed against the tapered walls 37 (FIG. 7) of the end plate 26 (FIG. 2) of the snap-on cantilever assembly 20 forming a tight wedge-like seal when the snap-on cantilever assembly 20 is pulled tight to form a fluid tight seal. As shown in this view, the detent 38A holds the snap-on cantilever assembly 20 on tightly by fitting within the opening 44A within the cantilever member 42A.

The inlet and outlet ports 22 and 56 respectively conform to ISO (international Organization for Standardization) 594/1 and 594/2 for six percent taper conical fittings but the particular type of fitting is not part of the invention and any suitable inlet and outlet ports may be used. The simple lock fittings were chosen for convenience in attaching and removing the disposable columns by hand.

In FIG. 5, there is shown a perspective view of the cantilever assembly 20 having the cantilever members 42A-42L, each separated by spaces between each cantilever member and central openings 44A-44L (44G-44K being shown in FIG. 5). The spaces between the cantilever members 42A-42L are picked to reduce bending strain on the bending of the cantilever members 42A-42L consistent with even pressure between the tapered edge of the walls of the column body 12 and the tapered portion of the end plate 26. The central openings 44A -44L are selected in size to keep tensile pressure sufficiently low to prevent failure while reducing bending pressure on the end plate 26. The central outlet port 56 communicates with outlet channels 24A-24H to receive the eluant from the cross-section of the filter 30 (FIG. 2) and transfer it to the outlet port 56.

In FIG. 6, there is shown a cross-sectional view of the snap-on cantilever assembly 20 of FIG. 5 showing the cantilever members 42A-42L (42A-42D being shown here) arranged to receive the low end of the ramped detents 38A-38L (FIGS. 1 and 2) and be pried outwardly as the walls of the column body 12 (FIG. 4) moves into the cantilever assembly 20 until the ramped detents fit within the corresponding ones of the openings 44A-44L (44A-44D being shown) to hold the cantilever assembly 20 in sealing relationship with the column body 12. As shown in this view, an angled portion in the cantilever members 42A-42D provides a surface 37 for receiving the tapered rim 49 (FIGS. 2-4 and 7) of the end of the walls of the column body 12 (FIG. 4) to form an interference fit to seal the column 10 except for the inlet and outlet ports 22 and 56 respectively.

In FIG. 7, there is shown a fragmentary, enlarged sectional view of a portion of the outlet end 16 showing the interference fit between the snap-on cantilever assembly 20 and the column body wall 12. As shown in this figure, cantilever member 42A is locked onto the detent 38A with the tapered rim 49 of the wall 12 engaging the sloping portion 37 of the wall of the end plate 26 with an interference fit adequate to prevent escape of fluids under the design pressure. The end plate 26 also has a circular ring 110 with a pointed end extending downwardly and contacting the filter 30 to serve as a secondary seal to prevent leakage of any packing material that may pass through the filter 30. The ring 110 is large enough and located close enough to the filter 30 to press into it and form a seal against the passage of material particles. The filter 30 fits against the walls of the column body 12 tightly enough to block the movement of packing material 58 (FIG. 3) around the filter 30 where it contacts the walls of the column body 12 but, if packing material 58 should be carried onto the outlet port side of the filter 30 because of a poor fit or deformity in the inner wall or in the filter 30, the ring 110 forms a sufficient seal to prevent the passage of the packing material 58 into the outlet port 56. A similar ring provides a secondary seal at the inlet port 22.

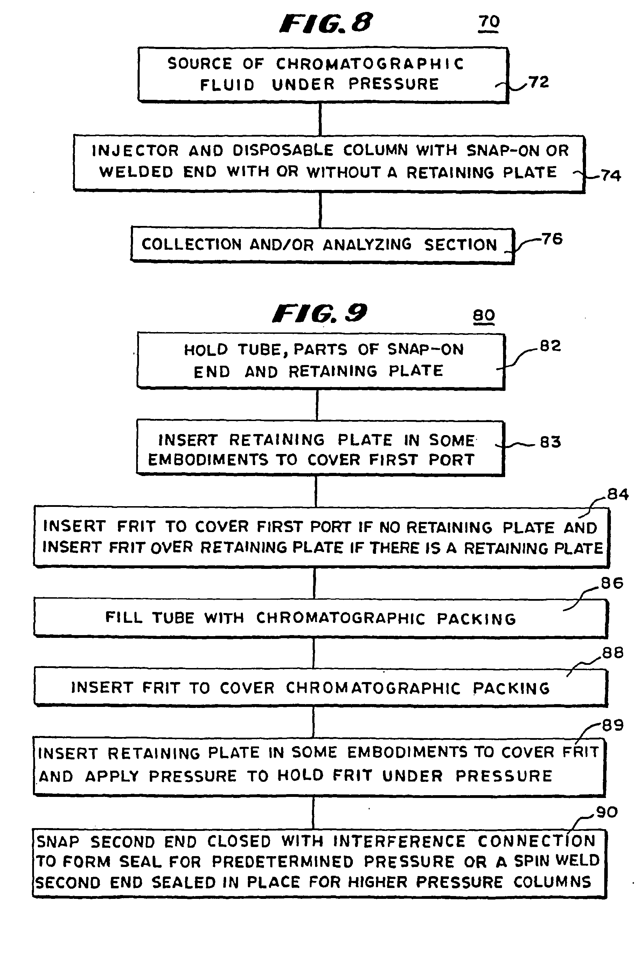

In FIG. 8, there is shown a chromatographic system 70 having a source of chromatographic fluid under pressure 72, a source of sample, sample injector and disposable column with snap-on or welded end 74 and a collection and/or analyzing section 76. The source of chromatographic fluid under pressure 72 supplies fluid to the disposable column 74 through a connection held in place by spring pressure so as not to require threaded connectors that must be tightened or loosened with tools such as wrenches. Sample is injected into the column for analysis and/or collection 76. The eluant for the outlet is supplied to the collection and/or analyzing section 76 for collection and/or analyzing of the eluants flowing through. In the preferred embodiment, the disposable column with snap-on or welded end 74 is designed for high flow through rates and short elution times. In some embodiments, one or more retaining plates are used to hold the packing in place or to apply pressure to the packing, particularly with high pressures. In some embodiments, one or more retaining plates are used to provide additional support to the support otherwise provided by an end plate of the column. The retaining place is flexible and linearly pressed into position to permit automatic assembly. The column is intended for one run after which a new column is used although it may last through several runs.

In FIG. 9, there is shown a block diagram of a process 80 for forming the column used in the chromatographic system of FIG. 8. As shown in step 82 of this figure, three separate units are molded. They are: (1) the tubular column body 12 of the chromatographic column 10; (2) at least one retaining plate that is incorporated in some high pressure embodiments; and (3) one end of the column that incorporates one of the inlet or outlet ports. After the body of the column has been molded in those high pressure embodiments requiring a retaining plate and in which the outlet end is integrally molded with the tubular column body, a frit plug or a retaining plate and a frit plug are inserted into the column so that the retaining plate, if one is included, is against the port and the frit plug against the packing as shown in step 83. Because the outer diameter of the retaining plate is slightly larger than the inner diameter of the walls of the column, the retaining plate is pushed inwardly under compression by the walls of the column against the edge of the retaining plate. The walls exert force against the edge of the retaining plate toward the center of the retaining plate as the retaining plate is pressed into the tubular column body. This bends the resilient plate so that it exerts force against the packing even if there is some shrinkage in the packing as long as the shrinkage or play on the other side does not exceed the resilience of the plate. The plate permits the closure to be welded while the packing is maintained under pressure rather than attempting to use the spin welding equipment to pressurize the packing.

For this effect, the retaining plate is flexible and sized in some embodiments to grip the inner walls of the tubular body tightly to form a seal against the walls as it is linearly pressed into the tubular body sufficient to grip the inner wails of the tubular body with sufficient force to permit placing the packing under pressure and holding the pressure. For this purpose, it should have an effective modulus of elasticity sufficiently low to flex as it is pressed into the column by an amount greater than the increase in inner diameter of the column as the column moves outwardly under high pressure and sufficiently high to grip the walls of the column with enough force to not be moved into a position that permits the packing to become loosened and create gaps or discontinuities. The rupture strength and yield point of the material from which the retaining plate is made must be sufficient to withstand the bending as it is pressed into the column. In this specification, the term effective modulus of elasticity means the ratio of stress to strain of the entire retaining plate rather than of the material from which it is composed so that it reflects the distance the retaining plate flexes inwardly under force as it is pressed into the column. Preferably, the effective modulus of elasticity is between 27 times 10⁶ and 32 times 10⁶ psi (pounds per square inch). Generally the retaining plates are within the range of thickness of 10 thousandths and 0.125 of an inch when suitable materials are used and should be less than 1/8 of an inch to maintain dead space to a minimum.

If the embodiment is one requiring a retaining plate, a filter or frit plug is next inserted into the tubular body to rest against the retaining plate, or if no retaining plate is required, to rest against the port and the open end of the channels molded into the end plate as shown in step 84. The filter and retaining plate, if one is included, are disk-shaped in the preferred embodiment to conform to the shape of the inner walls of the column. The filter and retaining plate, if a retaining plate is included, lie against the channels molded in the outlet side that channel fluid inwardly through the port to more uniformly collect the solvent flowing out of the packing material from across its cross section. The packing material is generally in the form of beads or other particles that may be inserted and packed in place.

When the filter and retaining plate, if a retaining plate is included, are in place, the tube is filled to the extent desired with chromatographic packing material as shown in step 86. The packing material is packed uniformly. In the preferred embodiment, this is accomplished by agitating the filled column and adding packing material if the settled packing material originally inserted falls below the required volume. The column is vibrated to aid in settling the packing material. After being filled to the extent desired with uniform packing material, a second disk-shaped flat filter is placed to hold the packing material in place.

In embodiments in which the inlet end of the column is molded integrally with the tubular body, the process is similar except the outlet plate rather than the inlet plate is molded as a separate entity and a retaining plate is pressed into place after the packing material has been compressed and the frit plug located over the packing material so that the retaining plate rests over the outlet channels. While in the preferred embodiment, the retaining plate or plates are located next to the end plate or plates and the frit plug or frit plugs are located next to the packing material, the retaining plates can be located next to the packing material if it contains only small openings so as to be able to compress the packing material and hold the silica particles comprising the packing material in place. If the retaining plates are next to the packing material, then the frit plug is located next to the outlet channels. In some embodiments, only a retaining plate is needed.

After the packing is in place, the frit plug is located over the packing as shown in step 88 and a second retaining plate may be inserted as shown in step 89. The second retaining plate is held in place by its edges in the same manner as the first retaining plate and maintains pressure against the packing to maintain a tightly packed column with a minimum of discontinuities that could cause band spreading. Thus a single retaining plate may be used to press the packing against an integrally formed end of the column or retaining plates may be used on each end or multiple retaining plates may be used one next to the other to provide resistance to movement of the packing material.

As an alternative to beads or other solid material, monomers may be polymerized in place. For example, a polymerization mixture may be polymerized in place with a porogen or solvent to form a polymer plug that has separation effective openings. In this specification, "separation-effective openings" means pores or channels or other openings that play a role in separation processes such as for example chromatography as described in United States patent 6,749,749, issued June 15, 2004, the disclosure of which is incorporated by reference. In packing the column with these polymers, shrinkage during polymerization is compensated for. In another embodiment of this invention, swelling after polymerization, which might otherwise later result in shrinkage, is avoided. Shrinkage results in enlarged voids on the polymer surface and may result in a lack of homogeneity of pore size distribution inside the polymer.

In a first embodiment, the compensation for shrinkage is accomplished by applying sufficient pressure during polymerization to create uniformity in the distribution of separation-effective openings and to avoid wall effect voids. This pressure has been found to also control particle size and the nature and shape of the openings in the plug to some exte nt. Maintaining the column at atmospheric pressure during polymerization to accommodate shrinkage does reliably prevent the formation of voids. The voids are removed when the plug stops shrinking when put under even modest amounts of pressure. In a second embodiment, shrinkage that otherwise would occur after polymerization is avoided. For example, some plugs tend to expand when exposed to some solutions such as organic solvent and then shrink later such as during a separating run in aqueous mobile phase, causing voids. In these embodiments, shrinkage is prevented by holding the column from shrinkage when exposed to the solutions. The application of pressure is one method of preventing shrinkage during exposure to the aqueous solutions.

The polymerization mixture in some embodiments includes: (1) selected monomers; (2) for some types of columns, an additive; (3) an initiator or catalyst; and (4) a porogen or porogens to form separation-effective openings. In some embodiments, function groups can be added before or after polymerization. The porogen, initiator, functional group to be added, additives, and reaction conditions and the monomer and/or polymer are selected for a specific type of column such as reverse phase, weak cation, strong cation, weak anion, strong anion columns, affinity support, normal phase, solid phase extraction and catalytic bed. The selection of components of the polymerization mixture is made to provide the desired quality of column.

A chromatographic column in accordance with this invention preferably includes a casing having internal walls to receive a permeable monolithic polymeric plug in which the separation-effective openings or surface features are of a controlled size formed in the polymer by a porogen in the polymerization mixture and are controlled in size by pressure during polymerization. This plug serves as a support for a sample in chromatographic columns. The permeable monolithic polymeric plug has smooth walls with no visible discontinuity in the plug wall and substantially no discontinuity or opening within the plug. Discontinuity in this specification means a raised portion or opening or depression or other change from the normal smoothness or pattern sufficient in size to be visible with the unaided eye. In this specification, the term "size-compensated polymers" or "size-compensated polymeric" means monolithic polymeric permeable material having separation-effective openings in which discontinuities and lack of homogeneity in the separation-effective openings have been prevented by the methods referred to in this specification such as for example applying pressure during polymerization or after polymerization during exposure to polar solutions in the case of some types of columns or by using a column that is prevented from further shrinkage in the presence of an aqueous solution by the application of pressure in the presence of the aqueous solution either during washing with an aqueous solution or during use in a separation operation using an aqueous solution.

In making size-compensated polymers for use in separation systems, the characteristics for a given type of separation can be tailored with a given polymer to the application by altering the amount of pressure applied during polymerization, or in the case of some polymers such as used in forming reverse phase separation media, by applying pressure when used or when otherwise brought into contact with a polar solvent such as an aqueous solvent or washing fluid. After the nature of the polymer itself has been selected for a class of applications, columns can be made and tested. Based on the tests, the characteristics can be altered in some columns by applying pressure. It is believed that the application of pressure in some columns increases the uniformity of particle size and either because of the change in particle size or for other reasons, the size distri bution and uniformity of separation effective openings throughout the polymer is increased. The increase in homogeniety of the particle size and pore size improves resolution. An increase in pressure generally improves capacity and resolution and the pressure-time gradient. It is believed that in some columns, micropores are greatly reduced or eliminated thus reducing zone spreading by the application of pressure during polymerization and/or during use orwashing of the polymer with polar solutions.

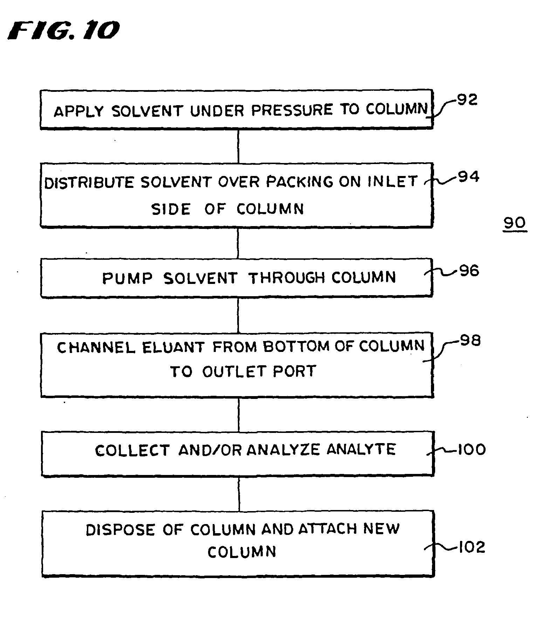

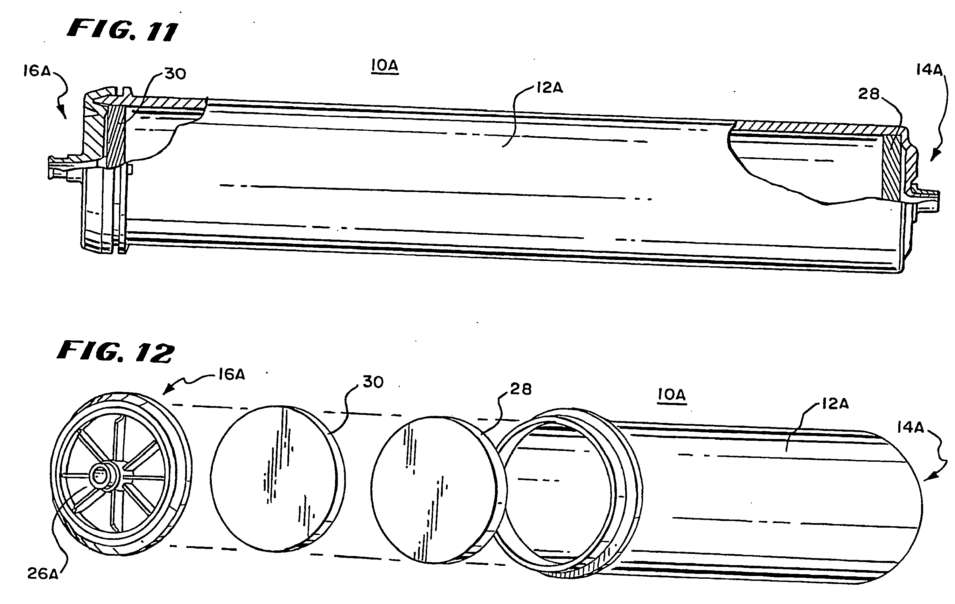

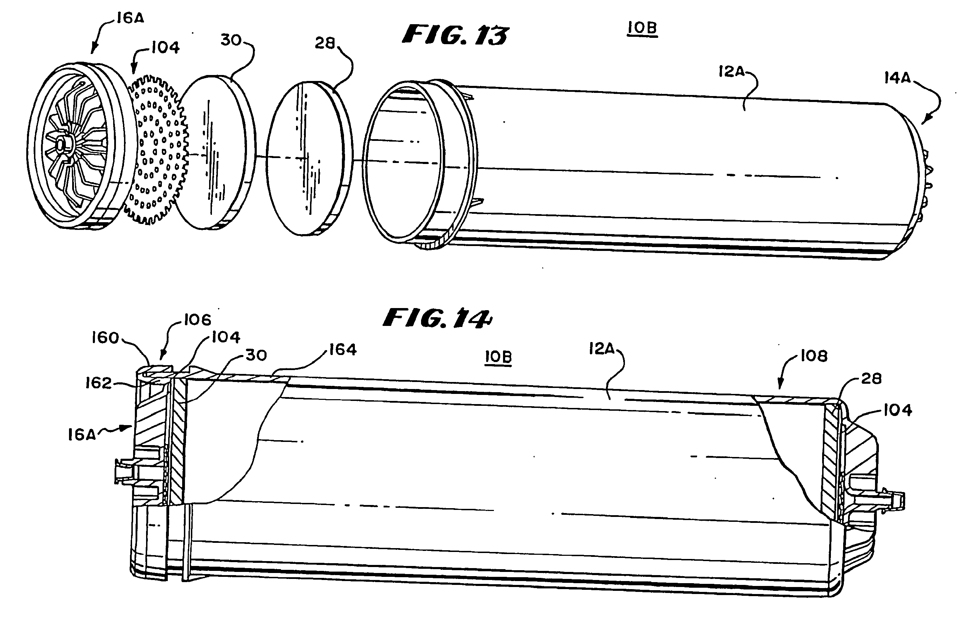

Finally, as shown at step 90, an end plate is attached to close the column. In one embodiment, the outlet end is snapped into place to provide an interference fit with the walls of the tube and be held with that interference fit by cantilever members and detents. In this embodiment, the detents are molded onto the body of the column and the snap-on end has a port with a ring sized to provide an interference fit with the walls. The detents are ramp-shaped and the cantilevers are bent outwardly as they move against and over the detents and snap over the opposite end at a location in which the ring and the body of the tube meet for a tight interference fit that will not leak even under the predetermined pressure for the column during operation. In another embodiment, the end is spin welded over the body instead of being snapped. Either the outlet end or the inlet end may be the end that is molded separately and snapped on or welded in place after assembly of the packing and frit plugs, or after the assembly of the packing, frit plugs and retaining plate. In FIG. 10, there is shown a flow diagram 90 of a process of chromatography utilizing the column 10 of FIG. 1 or 10A of FIG. 11 or 10B of FIG. 14. As shown in FIG. 10, the column when assembled as described in FIGS. 8 and 9 has solvent applied under pressure as shown at step 92. The solvent is distributed over the inlet end of the packing material by channels through which it flows and which have the side facing the packing material open so that the fluid pressure flows the liquid across the filter and then from the filter down into the packing material as shown at step 94.

The solvent is pumped through the column at the selected flow rate for the chromatographic run as shown at step 96 and carries eluant to the bottom of the column where channels opening against the filter or retaining plate channel the fluid evenly to the outlet port so that fluid with a direct flow route through the packing material is flowed rapidly through the channels to the outlet port rather than through the slower radial path of the packing material as shown in step 98. The eluant is then collected and analyzed in a conventional manner as shown at 100. After a number of runs of between one and ten, but preferably one run, the column is removed and disposed of as shown at step 102. They are constructed economically so as to render this possible. A new disposable column may then be connected for further chromatographic runs. Typically, runs with the disposable columns are completed in 30 minutes or less and flow rates are 100 milliliters per minute or less. Each run should be completed in 60 minutes or less and average flow rates should be between 25 ml. and 200 ml. per minute.

In FIGS. 11 and 12, there are shown a side elevational view and a perspective exploded view respectively of another embodiment of column 10A substantially identical to the embodiment 10 of FIGS. 1 and 2 except that the outlet end 16A of the embodiment of FIGS. 11 and 12 differs from the outlet end 16 of the embodiment of FIGS. 1 and 2. The outlet end 16A of FIGS. 11 AND 12 differs from the outlet end 16 of FIGS. 1 and 2 by omitting the snap connection and including a spin welded seal instead. In the embodiments of FIGS. 11 and 12, the identical parts have the same reference numerals as in the embodiment of FIGS. 1 and 2 and the changed parts are the same except the reference numeral is follow by the suffix A.

To permit efficient spin welding of a seal on the outlet end 16A, the end plate 26A includes radially extending ridges that permit gripping by conventional spin welding equipment to spin the end plate for the purpose of a spin weld. The spin welded seal is intended to maintain its seal under larger forces such as would occur because of higher pressure in the column during use of a larger sized column. Appropriate spin welding equipment can be obtained from any of several sources such as Dukane Corporation, 2900 Dukane Drive, St. Charles, IL or Trinetics Group Inc. 1885 Armstrong Drive, Titusville, FL.

In FIG. 13, there is shown an exploded view of another embodiment of column 10B similar to the embodiments of columns 10 and 10A of FIGS. 1 and 11. The embodiment of column 10B is substantially the same as the embodiment of column 10A except that the embodiment 10B includes a retaining plate 104 as well as the end cap 16A, the filter 30, the filter 28, packing material (not shown), the housing 12A and the end cap 14A. As shown in FIG. 13, the retaining plate 104 includes a plurality of small teeth extending radially outwardly from the periphery, which dig into the inner wall of the column and hold the retaining plate 104 in place. This serves two purposes. One purpose is to permit the packing material to be pressurized during fabrication of the column before spin welding the end of the column in place and to hold its pressure after fabrication and during chromatographic runs. With this arrangement, under high pressure, such as for example 50 psi or about 600 pounds of force against the end cap for some large diameter configurations, the retaining plate 104 aids in holding the end of the column against becoming lose and leaking. Moreover with more tightly packed packing, the frit plug is less likely to be separated and leave gaps in the packing.

In some embodiments of columns, the retaining plate 104 is held by friction against the sides of the inner walls of the housing 12A. It is sufficiently flexible to be pressed in place with linear motion, thus enabling the embodiment of FIG. 13 to be assembled automatically. In practice, it is usually a thin non-elastomeric member. The retaining plate 104 has sufficient open spaces, is formed of a sufficiently flexible material, is sufficiently thin and has a diameter sized so that the retaining plate bends when pressed into place, and when in place, grips the walls of the column. It is pressed into place with sufficient force to prevent packing from moving significantly from its original packed position during a high pressure chromatographic run and thus avoids creating gaps that degrade the performance of the column. In one embodiment, the open spaces are sufficiently small to block packing material.

In this specification, the term "column adjusted retaining plate" means a member sufficiently flexible and sized to grip the inner walls of a column to hold at least one side surface of the packing, or one frit plug, or filter, or porous plate or other member in place against pressure internal to the packing. The pressure internal to the packing in this definition is sufficient to prevent packing from moving from its original packed position during a high pressure chromatographic run and thus sufficiently high to avoid the creation of gaps that degrade the performance of the column.

Packing material in a column that is under sufficient pressure to avoid moving from its original packed position during a high pressure chromatographic run within the design pressure of the column to such an extent as to degrade the performance of the column may be referred to as design-pressure packing in this specification. To fasten the closure by spin welding, the closure is gripped by the spin welding apparatus and spun until the closure is in intimate relationship with the column adjusted retaining plate and a temperature between the closure and the column body has become high enough by friction to weld the closure to the column body. In the preferred embodiment, the intimate contact is touching but could be slightly short of touching or the spin welding apparatus could touch and press inwardly to add to the pressure applied to the packing. These relationships are each referred to as intimate relationships.

A column adjusted retaining plate has a high enough modulus of elasticity to hold design-pressure packing in place. When the design-pressure packing is in place, the walls of the column are bowed outwardly from the hoop force caused by the design-pressure packing but the column adjusted retaining place is flexed enough to hold the packing with an interference fit or by digging into the walls of the column or by another mechanism to hold the packing in place. It has a modulus of elasticity sufficiently low to permit it to be pressed into place with linear force and has dead space sufficiently small to avoid degrading of the chromatographic peaks.

A retaining plate that is column adjusted, has a modulus of elasticity sufficiently high to hold the packing in place, has dead space sufficiently low to avoid degrading of the chromatographic peaks and can be pressed into place with a linear force sufficiently high to pressurize the packing. Retaining plates having these characteristics will from time to time be referred to herein as chromatographically-adjusted retaining plates. Dead space is the space in openings in the retaining plate that may hold eluant. It is reduced by making the openings small and the thickness of the retaining plate low while having sufficient openings to provide flexibility. In the preferred embodiment, it is a thin stainless steel plate with many small holes in it and peripheral, radially-extending, spaced apart teeth to dig into the inner wall of the column as described hereinafter.

In FIG. 14, there is shown a side elevational view of the column 10B with the housing 12A partly broken away at 106 and 108 respectively to show the frit plugs 30 and 28 as well as the retaining plate 104 at the outlet end of the column. Otherwise the column is as described in connection with FIG. 13. As shown in this view, the spin-welded end 16A is formed with a circumferential loop having sides 160 and 162 that receive the end of wall 164 of the column 10B to which the loop is friction welded by rapid spinning. Retaining plates 104 are located against the open sides of the channels on each side in the embodiment of FIG. 14, but in other embodiments, the retaining plate can be located at a distance from the ends of the columns or only on the end of the column that is open to receive the independently molded end plate so that it can be pressed against the packing to hold it in place under pressure.

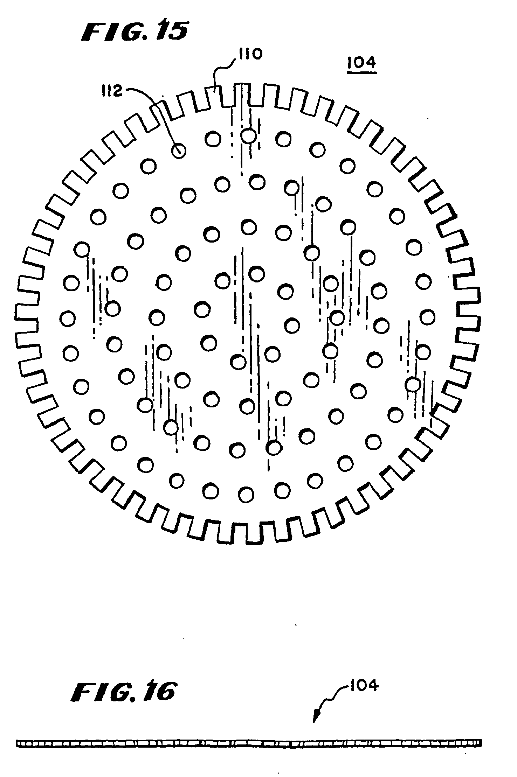

In FIGS. 15 and 16, there are shown a plan view and a side view respectively of the retaining plate 104. As best shown in FIG. 15, the retaining plate 104 has a plurality of teeth 110 surrounding its periphery and a plurality of openings 112 in its central portion. The openings 112 are sufficiently large to permit unimpeded flow of eluant and solvent. In a preferred embodiment, they have diameters of 0.125 of an inch and should be in a range of between 50 thousandth and three tenths of an inch. The teeth 110 are separated one from the other by the same distance as the diameter of the openings and have widths similar to the diameter of the openings in the preferred embodiment. As best shown in FIG. 16, the retaining plate 104 is sufficiently thin to permit bending, particularly at the teeth 110, and gripping of the internal walls of the column when perpendicular to the longitudinal axis of the column. It is located between the end plate and the frit plug so as to resist the force of fluid. It may be made of any suitable material compatible with the fluids flowing through the column having sufficient rupture strength, a high enough yield point and sufficient modulus of elasticity. In the preferred embodiment, the retaining plate 104 is stainless steel and has a thickness of 31 thousandth of an inch.

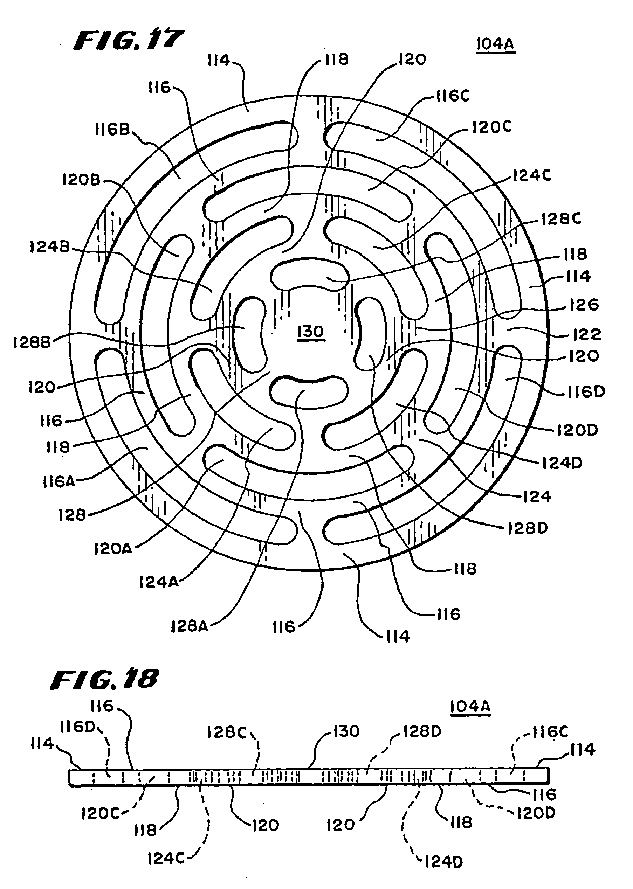

In FIGS. 17 and 18, there is shown a plan view and a side view respectively of another embodiment of retaining plate 104A formed of polypropylene with a thickness of 125 thousandths of an inch. The embodiment of FIGS. 17 and 18 is of a configuration that differs from that of FIGS. 15 and 16 in that it has more open space to provide increased flow through and more flexibility than the embodiments of FIGS. 15 and 16. It includes a peripheral outer continuous annulus 114 followed by a series of radially-spaced concentric successively-shorter-radii continuous annulus 116, 118 and 120 in that order ending in a center member 130. The continuous annulus 114, 116, 118 and 120 are spaced from each other by a corresponding series of arched slots spaced from each other in a ring by connecting members. The continuous annulus 114, 116, 118, and 120 are each 0.15 of an inch wide and the center member 130 has a radius of 0.4 of an inch.

The outer annulus 114 is connected to the next inner annulus 116 by four circumferentially-spaced 15 degree wide connecting members, one of which is indicated by the numeral 122, which separate four circumferentially-spaced 75 degree arched elongated, 0.250 of an inch wide openings 116A-116D. The next inner annulus 118 is connected to the annulus 116 by four circumferentially-spaced 15 degree wide connecting members, one of which is indicated by the numeral 124, which separate four circumerentially-spaced 75 degree arched elongated, 0.250 fo an inch wide openings 120A-120D. The next inner annulus 120 is connected to the annulus 118 by four circumferentially-spaced 15 degree wide connecting members, one of which is indicated by the numeral 126, which separate four circumferentially-spaced 75 degree arched elongated, 0.250 of an inch wide openings 124A-124D. The center portion 130 is connected to the annulus 120 by four circumferentially-spaced 15 degree wide connecting members, one of which is indicated by the numeral 128, which separate four circumferentially-spaced 75 degree arched elongated, 0.250 of an inch wide openings 128A-128D.

With this arrangement, a flexible plastic retaining plate that is sufficiently strong while being sufficiently resilient can be forced into place and used to apply pressure to the packing. It grips the outer walls when held between the frit plug and the end plate to be substantially straight and exert an interference fit against the walls.

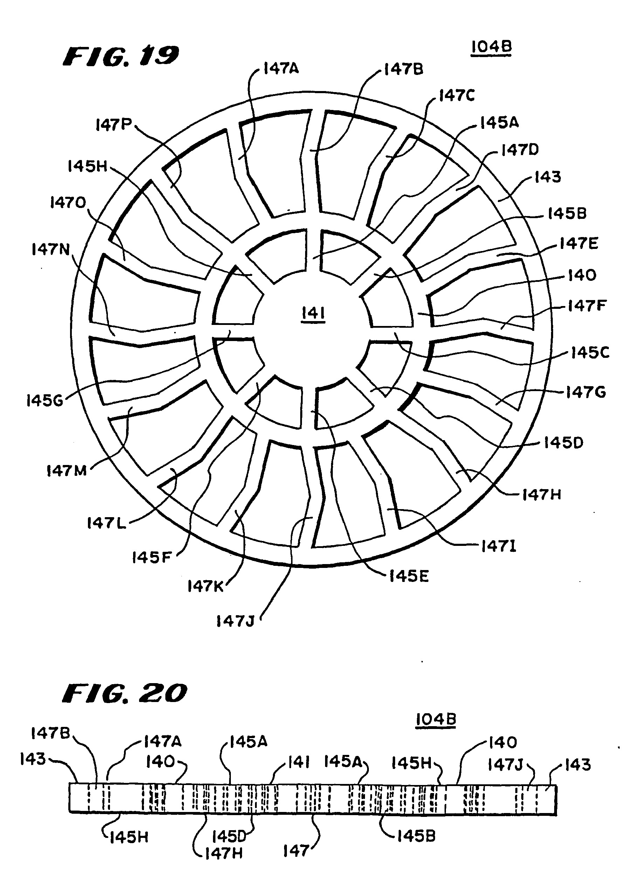

In FIGS. 19 and 20, there is shown still another embodiment of retaining plate 104B 0.250 of an inch in thickness formed of polypropylene, having a central one-inch diameter solid portion 141, a solid two inches outer-diameter 0.320 of an inch wide intermediate annulus 140 and a four inches outer-diameter 0.320 of an inch wide outer ring 143. The inner circular center 141 is connected to the intermediate ring 140 by eight radially extending circumferentially spaced 0.120 of an inch wide arms 145A-145H and the intermediate annulus 140 is connected to the outer annulus 143 by 16 circumferentially-spaced generally radially-extending two-section 0.120 of an inch wide arms147A-147P. Each of the arms 147A-147P includes an inner section extending 30 degrees from the radial direction for half the distance to the outer annulus and then 30 degrees in the other direction for the other half of the distance so that it is offset from the radius for easier bending in compression.

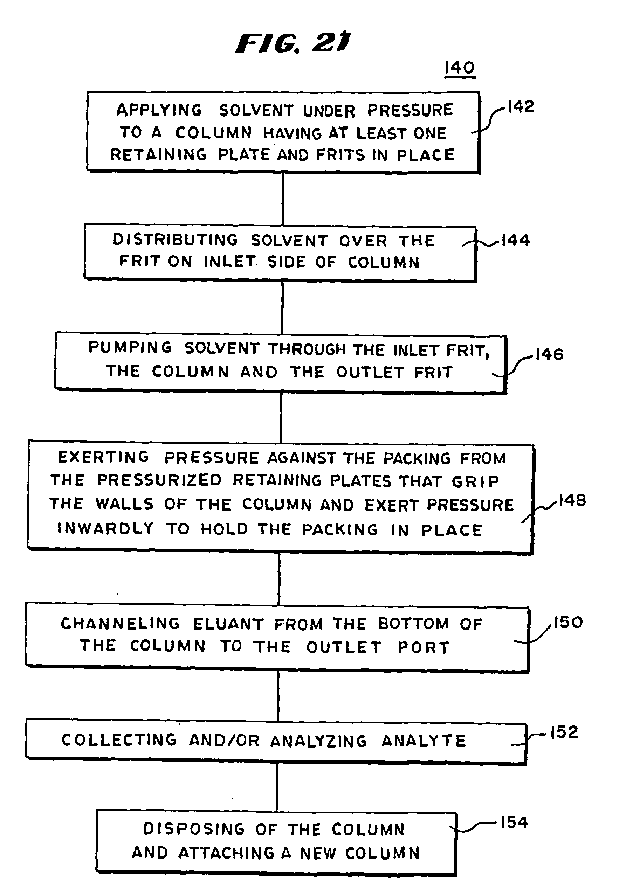

In FIG. 21, there is a flow diagram 140 showing the use of the embodiments of FIGS. 13-20 including the step 142 of applying a solvent under pressure to a column with a retaining plate and frit plugs in place; the step 144 of distributing solvent over the frit plug at the inlet side of the column, the step 146 of pumping solvent through the inlet frit plug, column and outlet frit plug; the step 148 of compressing the packing with a retaining plate that tightly grips the walls of the column; the step 150 of channeling eluant from the end of the column to the outlet port; the step 152 of collecting and/or analyzing the analyte; and the step 154 of disposing of the column and attaching a new column. In this process, an inexpensive column is used even though the pressure for performing the liquid chromatography is so high that the walls of the column may be forced outwardly from the frit plug and release pressure on the packing and permit some packing material to be moved and create gaps and in some cases, loosen the end plate of the column so that it leaks.

In this embodiment, a retaining plate that is placed under compression when it is linearly inserted into the column expands as pressure is increased within the column by movement outward of the column walls and blocks the passage of packing material around the edges of the frit plug. Preferably, the retaining plate is held between the outlet side of the frit plug and the bottom or end plate of the column so that it remains relatively stiff and under pressure. Because the retaining plate can be easily formed such as by molding of a plastic or machining of a stainless steel thin member and can be pressed into the column with only linear force, the column may remain inexpensive and yet handle high pressures.

From the above description, it can be understood that the method and apparatus of this invention has several advantages, such as: (1) it is economical in terms of its fabricating materials; (2) it is inexpensive to assemble; (3) it can be assembled readily in an automated process; and (4) it can be easily formed of relatively inexpensive materials.

While a preferred embodiment of the invention has been described with some particularity, many modifications and variations in the invention are possible within the light of the above teaching. Therefore, it is to be understood, that within the scope of the pending claims, the invention may be practiced other than as specifically described.

## Claims

1. A method of performing chromatography comprising the steps of: causing solvent to flow from at least one source of solvent through an inlet port (22) of a column (10); said column (10) including a tubular body portion (12) with body walls, an inlet end member (14) having an inlet port (22), packing material (58), and an outlet end member (16) having an outlet port (56), wherein at least one of said inlet end member (14) and outlet end member (16) is integrally molded with the tubular body portion (12); causing the solvent to flow from said inlet port (22) through radial channels (18A-18H) integrally formed with the inlet port (22) and opening toward an interior of the column (10); causing the solvent to flow from said radial channels (18A-18H) through frit (28, 30); causing the solvent to flow through packing material (58); causing the solvent to flow through the packing material (58) into the channels (24A-24H) integrally formed in the outlet end member (16) into the outlet port (56); **characterized by** the step of causing the solvent to flow in a path between the inlet port (22) and the outlet port (56) through at least one column adjusted retaining plate (104).

2. The method of claim 1 further **characterized by** the step of disposing of the column (10) after between one and ten chromatographic runs and connecting a new column.

3. The method of either claim 1 or claim 2 further **characterized by** the step of causing the solvent to flow from the inlet end member (14) and inlet port (22) through an inlet filter (28), the packing material (58), and an outlet filter (30) to the outlet end member (16) and through the outlet port (56).

4. The method of either claim 1 or 3 **characterized in that** the solvent is caused to flow through the packing material (58) into an outlet filter (30) and through the outlet filter (30) into channels (24A-24H) radiating from a circumference of the body walls and into the outlet port (56).

5. The method of any of claims 1-4 **characterized in that** the step of causing the solvent to flow in a path between the inlet port (22) and the outlet port (56) through at least one column adjusted retaining plate (104) includes the step of causing the solvent to flow through at least one chromatographically-adjusted retaining plate (104).

6. A method of performing chromatography comprising the steps of: causing solvent to flow from at least one source of solvent through an inlet port (22) of a column (10); causing the solvent to flow from said inlet port (22) through radial channels (18A-18H) integrally formed with the inlet port (22) and opening toward an interior of the column (10); causing the solvent to flow from said radial channels (18A-18H) through frit (28,30); causing the solvent to flow through packing material (58), said column (10) including a tubular body portion (12) with body walls, an inlet end member (14) having an inlet port (22), packing material (58), and an outlet end member (16) having an outlet port (56), wherein at least one of said inlet end member and outlet end member is integrally molded with the tubular body portion (12); causing the solvent to flow through the packing material (58) into the channels (24A-24H) integrally formed in the outlet end member (16) into the outlet port (56); **characterized by** the steps of determining if pressure is low, medium range or high; for low pressures, causing the solvent to flow in its path between the inlet port (22) and the outlet port (56) through a snap-on end plate (20); for a medium range of pressures, causing solvent to flow in its path between the inlet port and the outlet port through an end plate (16A) that is spin welded in place; and for high pressures, causing the solvent to flow in its path between the inlet port (22) and the outlet port (56) through at least one column adjusted retaining plate (104).
